# FASCICULE DE BREVET EUROPEEN

(11) **EP 2 811 465 B1**
(45) Date de publication et mention de la délivrance du brevet: **11.05.2016**
(21) Numéro de dépôt: 14171543.3
(22) Date de dépôt: 06.06.2014
(51) Int. Cl.: G08B 13/196, H04N 5/272

(54) **Système de vidéosurveillance**
Videoüberwachungssystem
Video surveillance system

(30) Priorité: 06.06.2013 FR 1301297
(43) Date de publication de la demande: 10.12.2014
(73) Titulaire: Thales, 92200 Neuilly Sur Seine (FR)
(72) Inventeur: Baklouti, Malek, 78141 VELIZY -VILLACOUBLAY CEDEX (FR); Rousselet, Rodolphe, 78141 VELIZY -VILLACOUBLAY CEDEX (FR); Allaf, Mustapha, 78141 VELIZY -VILLACOUBLAY CEDEX (FR)
(74) Mandataire: Blot, Philippe Robert Emile

(56) Documents cités:
- EP-A1- 2 549 753
- WO-A2-2009/122416
- US-A1- 2005 269 404
- US-A1- 2012 327 220

## Description

La présente invention concerné un système de vidéosurveillance, comprenant :
- au moins une caméra comportant un champ d'observation et propre à délivrer des images de son champ d'observation,
- au moins un équipement commandable à distance et situé dans le champ d'observation de ladite caméra,
- au moins un poste de surveillance connecté à au moins une caméra et comprenant des moyens de saisie, des moyens d'affichage pour l'affichage d'une séquence temporelle d'images délivrées par la ou chaque caméra correspondante, et un module de génération d'interface configuré pour générer une interface graphique en surimpression sur les images affichées sur les moyens d'affichage.

L'invention se situe dans le domaine des systèmes de vidéosurveillance.

Ces systèmes sont couramment utilisés pour surveiller des installations de divers types, telles que par exemple des installations de transport public, des bâtiments, des usines, des espaces commerciaux ou des hangars, et en particulier pour surveiller certains des équipements que comprennent ces installations.

Les caméras de ces systèmes fournissent des images de leur champ d'observation au poste de surveillance au moyen duquel un opérateur réalise à proprement parler la surveillance de l'installation.

Afin d'améliorer l'ergonomie des postes de surveillance, il est connu de munir ces derniers d'un module de génération d'interface graphique configuré pour générer l'interface graphique en surimpression sur les images délivrées par la caméra. L'opérateur peut alors accéder aux fonctionnalités de l'interface graphique directement depuis les images fournies par les caméras. Toutefois, les systèmes de surveillance connus présentent des inconvénients.

En effet, la commande des équipements de l'installation y est généralement réalisée via une interface dédiée. Pour commander le ou les équipements, l'opérateur doit alors diviser son attention entre les images et l'interface dédiée à la commande des équipements, ce qui diminue l'efficacité de la surveillance et augmente le temps de réaction de l'opérateur aux évènements se produisant dans la zone surveillée. L'ergonomie du poste de surveillance n'est alors pas optimale.

L'un des objets de l'invention est donc de proposer un système de vidéosurveillance dont l'ergonomie est améliorée.

A cet effet, l'invention porte sur un système de vidéosurveillance tel que défini ci-dessus, caractérisé en ce que le module de génération d'interface du ou de chaque poste de surveillance est configuré pour générer et afficher, via l'interface graphique, un élément d'identification dudit équipement en surimpression directement sur l'équipement, de telle que sorte que l'élément d'identification est superposé à l'équipement sur les images, en ce que l'élément d'identification est sélectivement activable via les moyens de saisie pour déclencher l'affichage sur l'interface graphique d'une interface de commande pour la commande à distance d'au moins un équipement, et en ce que le système de vidéosurveillance comprend des moyens de commande pour la commande du ou de chaque équipement en fonction d'informations saisies par un utilisateur via l'interface de commande.

Selon d'autres aspects de l'invention, le système de vidéosurveillance comprend en outre une ou plusieurs des caractéristiques techniques suivantes, prise(s) isolément ou selon toute(s) combinaison(s) techniquement possible(s) :
- au moins un poste de surveillance comprend un deuxième mode de fonctionnement dans lequel l'interface graphique dudit poste de surveillance est adaptée pour réaliser l'affichage d'informations géométriques comprenant la distance, dans le champ d'observation de la caméra dont les images sont affichées sur les moyens d'affichage, entre deux points des moyens d'affichage, et/ou la vitesse de déplacement d'un objet dans le champ d'observation de la caméra dont les images sont affichées sur les moyens d'affichage ;
- le deuxième mode de fonctionnement comprend un mode de fonctionnement horizontal dans lequel les informations géométriques sont projetées dans un plan horizontal prédéterminé du champ d'observation de la caméra dont les images sont affichées sur les moyens d'affichage, et un mode de fonctionnement vertical dans lequel les informations géométriques sont projetées sur une droite orthogonale au plan horizontal ;
- le poste de surveillance comprend un premier mode de fonctionnement dans lequel l'interface graphique associée est adaptée pour la création d'objets virtuels et l'association de chaque objet virtuel à une position du champ d'observation d'une caméra à laquelle ledit poste de surveillance est connecté, de sorte qu'un objet virtuel est affiché sur les images fournies par ladite caméra et dans lesquelles la position du champ d'observation associée à l'objet virtuel est affichée ;
- chaque objet virtuel est affiché sur les images fournies par chacune des caméras connectées audit poste de surveillance et dont le champ d'observation comprend la position à laquelle l'objet virtuel est associé ;
- chaque objet virtuel est affiché sur les images fournies par chacune des caméras du système de vidéosurveillance et dont le champ d'observation comprend la position à laquelle l'objet virtuel est associé ;
- un objet virtuel est compris dans le groupe consistant en: une forme géométrique translucide, une forme géométrique opaque, un ensemble de caractères alphanumériques, une icône ou un symbole ;
- au moins une caméra est orientable, l'interface graphique d'au moins l'un des postes de surveillance connectés à ladite caméra comprenant au moins une touche de rappel sélectivement actionnable pour déclencher le rappel de la caméra dans une orientation prédéterminée ;
- au moins une caméra est orientable, l'interface graphique d'au moins l'un des postes de surveillance connectés à ladite caméra comprenant une barre d'orientation représentant l'ensemble des orientations possibles de ladite caméra selon le ou l'un des degrés de liberté de ladite caméra ; et
- la barre d'orientation comprend un ou plusieurs emplacements sélectionnables, la sélection d'un emplacement sélectionnable de la barre d'orientation étant configurée pour déclencher le rappel de ladite caméra dans l'orientation correspondante.

L'invention sera mieux comprise à la lecture de la description détaillée qui va suivre, donnée uniquement à titre d'exemple et faite en se référant aux Figures annexées, sur lesquelles :
- la Figure 1 est une représentation schématique du système de vidéosurveillance selon l'invention ; et
- la Figure 2 est une représentation schématique de l'interface graphique d'un poste de surveillance du système de vidéosurveillance de la Figure 1.

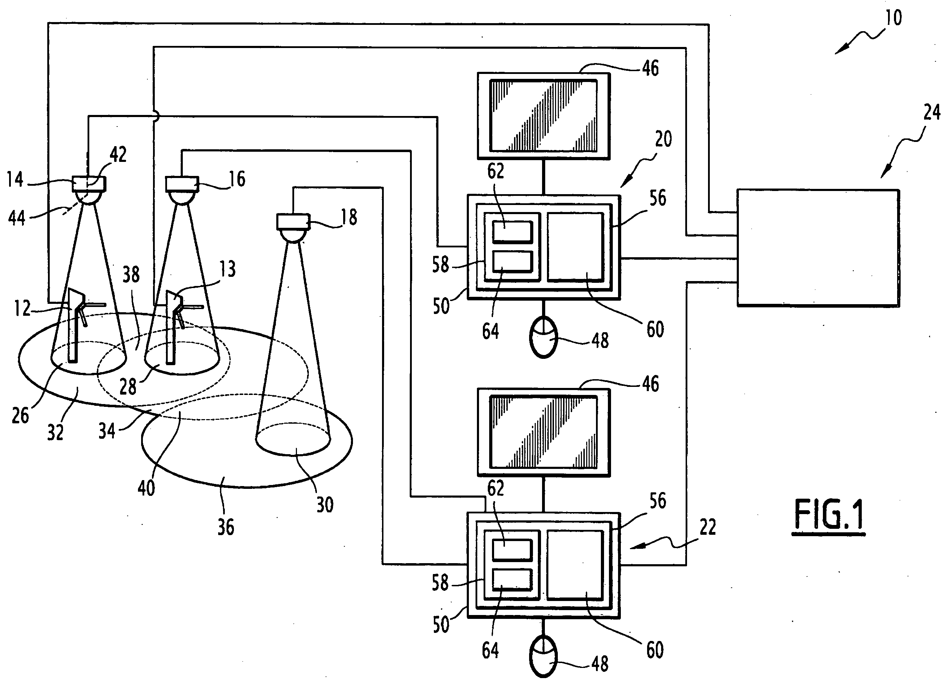

La Figure 1 illustre un système de vidéosurveillance 10 selon l'invention, ci-après système 10.

Le système 10 est destiné à la surveillance d'une installation donnée, par exemple un bâtiment, une usine, un entrepôt, une installation de transport public telle que par exemple un aéroport ou une gare, etc. Le système 10 comprend un premier et un deuxième équipements 12, 13, une première, une deuxième et une troisième caméras 14, 16, 18 respectivement, un premier et un deuxième postes de surveillance 20, 22, ci-après postes 20, 22, et un serveur de gestion 24, ci-après serveur 24.

Les équipements 12, 13 sont commandables à distance. Les équipements 12, 13 sont connectés au serveur 24. Les équipements 12, 13 sont des équipements de l'installation que le système 10 permet de surveiller. Dans l'exemple de la Figure 1, les équipements 12, 13 sont des tourniquets.

En variante, les équipements 12, 13 sont l'un des éléments suivants : une porte d'accès, un panneau d'affichage programmable, une machine outil, ou encore tout dispositif de l'installation considérée dont la commande à distance est réalisable et se trouvant dans le champ d'observation d'au moins l'une des caméras 14, 16, 18.

En variante, le système 10 comprend un ou plus de deux équipements 12, 13 commandables à distances et connectés au serveur 24.

Les caméras 14, 16, 18 sont connectées à au moins un poste de surveillance 20, 22. Dans l'exemple de la Figure 1, la première caméra 14 est connectée au premier poste 20, et la deuxième et la troisième caméras 16, 18 sont connectées au deuxième poste 22.

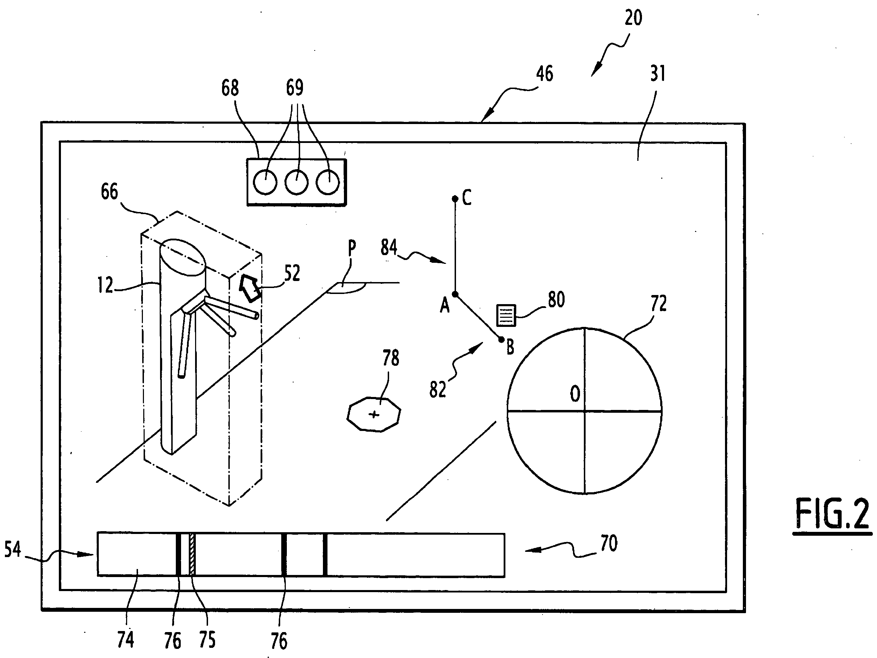

Chaque caméra 14, 16, 18 possède un champ de vue 26, 28, 30 et est propre à délivrer au poste 20, 22 correspondant des images 31 (Figure 2) correspondant chacune à une prise de vue de son champ de vue 26, 28, 30.

Les caméras 14, 16, 18 sont orientables, c'est-à-dire qu'elles sont propres à faire défiler leur champ de vue 26, 28, 30 respectif.

L'ensemble des champs de vue 26, 28, 30 possibles d'une caméra 14, 16, 18 forme un champ d'observation 32, 34, 36 de la caméra. Le champ d'observation 32, 34, 36 correspond en pratique à l'ensemble des éléments de l'installation que la caméra 14, 16, 18 correspondante est propre à observer.

Les champs d'observation 32, 34 de la première et deuxième caméras 14, 16 présentent une première partie commune 38, et les champs d'observation 34, 36 de la deuxième et de la troisième caméras 16, 18 présentent une deuxième partie commune 40.

Dans l'exemple de la Figure 1, le premier équipement 12 est situé dans le champ d'observation 32 de la première caméra 14 et le deuxième équipement 13 est situé dans la première partie commune 38.

Dans l'exemple de la Figure 1, les caméras 14, 16, 18 sont des caméras dôme de type PTZ, acronyme anglophone de « Pan Tilt Zoom », qui signifie « Panoramique Inclinaison Grossissement ». Le champ de vue 26, 28, 30 des caméras 14, 16, 18 est ainsi pivotable autour de deux orthogonaux, ci-après axe panoramique 42 et axe d'inclinaison 44 (en pointillés sur la Figure 1 et représentés uniquement pour la première caméra 14) et est déplaçable en profondeur, c'est-à-dire que les caméras sont propres à réaliser des grossissements et des rétrécissements. Ceci permet aux caméras de disposer d'un champ d'observation 32, 34, 36 de taille maximale et de pouvoir modifier le niveau de grossissements des éléments de l'installation.

Chaque caméra 14, 16, 18 est configurée pour fournir à chaque poste 20, 22 auquel elle est connecté des informations représentatives de son orientation actuelle. Dans le cas de caméras dôme de type PTZ, les caméras 14, 16, 18 fournissent ainsi des informations représentatives de leur orientation actuelle selon leur axe panoramique 42 et leur axe d'inclinaison 44, ainsi que leur niveau de grossissement actuel.

Les postes de surveillance 20, 22 sont connectés au serveur 24 et à au moins l'une des caméras 14, 16, 18. Chaque poste 20, 22 comprend des moyens d'affichage 46, des moyens de saisie 48 et une unité de traitement 50.

Les moyens d'affichage 46 comprennent un écran propre à réaliser l'affichage des images 31 fournies par les caméras 14, 16, 18 connectées au poste 20, 22 correspondant.

Les moyens de saisie 48 sont propres à permettre à un opérateur de saisir des données pour interagir avec les moyens d'affichage 46 et l'unité de traitement 50, et notamment avec une interface graphique générée par l'unité de traitement 50 sur les moyens d'affichage 46. Les moyens de saisie 48 comprennent un clavier (non représenté) et une souris associée à un curseur 52 visualisable sur les moyens d'affichage 46 et que l'opérateur du poste 20, 22 correspondant déplace sur les moyens d'affichage 46 en déplaçant la souris. L'opérateur interagit par exemple avec un élément affiché sur les moyens d'affichage 46 par positionnement du curseur 52 au-dessus de l'élément puis actionnement de la souris.

En variante, les moyens d'affichage 46 et les moyens de saisie 48 sont adaptés pour permettre à l'opérateur d'interagir tactilement avec les moyens d'affichage 46.

En référence aux Figures 1 et 2, l'unité de traitement 50 est propre à piloter les moyens d'affichage 46 et les moyens de saisie 48 et à communiquer avec le serveur 24. En outre, l'unité de traitement 50 est propre à réaliser l'affichage sur les moyens d'affichage 46 des images 31 fournies par les caméras 14, 16, 18 associées et à générer une interface graphique 54 en surimpression sur les images 31.

L'unité de traitement 50 est connectée aux caméras 14, 16, 18 associées et comprend un processeur et une mémoire (non représentés) comprenant des logiciels nécessaires au fonctionnement classique de l'unité de traitement 50. En outre, l'unité de traitement 50 comprend un module de génération d'interface graphique 56 configuré pour générer l'interface graphique 54, qui est décrite plus en détail ci-dessous.

Le module d'interface graphique 56 comprend un module de réalité augmentée 58 et un module de contrôle 60.

Le module de réalité augmentée 58 comprend un module de calcul 62 configuré pour transposer la position des points du champ d'observation 32, 34, 36 des caméras 14, 16, 18 associées au poste 20, 22 correspondant en une position sur les moyens d'affichage 46, et inversement.

Plus spécifiquement, le module de calcul 62 est configuré pour déterminer la position des points du champ d'observation 32, 34, 36 à partir de leur position sur les images 31 affichées sur les moyens d'affichage 46 et de paramètres fournis par la caméra correspondante et indiquant l'orientation de la caméra, et pour déterminer la position des points sur les moyens d'affichage 46 à partir de la position correspondante dans le champ d'observation 32, 34, 36 et des paramètres fournis par la caméra. Le module de calcul 62 permet ainsi d'établir une correspondance entre la position des points des champs d'observation 32, 34, 36 et la position des points des images 31 affichées sur les moyens d'affichage 46. Comme on le verra par la suite, ceci permet d'associer de façon rémanente la position d'un élément de l'interface graphique 54 à la position d'un point du champ d'observation d'une ou plusieurs caméras 14, 16, 18.

En outre, le module de réalité augmentée 58 comprend un module de rendu 64 configuré pour générer, sur les moyens d'affichage 46, l'interface graphique 54 en surimpression sur les images 31 à partir de données fournies par le module de calcul 62, par les caméras 14, 16, 18 et par le serveur 24. En d'autres termes, le module de réalité augmentée 58 pilote l'affichage de l'interface graphique 54 à partir des données qu'il reçoit des autres organes du système 10 auxquels il est connecté.

Le module de contrôle 60 est configuré pour prendre en charge les interactions des moyens de saisie 48 avec l'interface graphique 54.

Plus spécifiquement, le module de contrôle 60 est configuré pour détecter la saisie de données par l'opérateur via une interaction des moyens de saisie 48 avec l'interface graphique 54, notamment via le curseur 52 affiché sur les moyens d'affichage 46, et transmettre l'information correspondante à l'organe du système 10 concerné, tel que la caméra 14, 16, 18, les équipements 12, 13 que l'opérateur souhaite commander ou le module de réalité augmentée 58. Dans le cas où les données sont destinées à une caméra ou à un équipement 12, 13, l'information est acheminée soit directement à la caméra 14, 16,18 correspondante, soit à l'équipement 12, 13 via le serveur 24.

Le serveur 24 est propre à permettre la communication des postes de surveillance 20, 22 entre eux et avec les équipements 12, 13, ainsi qu'à fournir des données de configuration du système 10 aux postes 20, 22.

Les données de configuration comprennent notamment des données relatives aux équipements 12, 13, ou encore à des objets virtuels dont l'affichage est réalisé sur les moyens d'affichage 46 des postes 20, 22. Ceci est décrit plus en détail dans ce qui suit.

L'interface graphique 54 va maintenant être décrite plus en détail en référence aux Figures 1 est 2.

L'interface graphique 54 est configurée pour permettre à l'opérateur d'interagir avec les caméras 14, 16, 18 associées au poste 20, 22 correspondant et avec les équipements 12, 13. En outre l'interface graphique est configurée pour activer sélectivement :
- un premier mode de fonctionnement dans lequel l'opérateur créé des objets virtuels et les associe à un point d'un champ d'observation 32, 34, 36, et
- un deuxième mode de fonctionnement dans lequel l'opérateur extrait des informations géométriques du champ de vue de la caméra 14, 16, 18 dont les images 31 sont affichées.

L'interface graphique 54 des postes 20, 22 comprend des éléments d'interface affichés en surimpression sur les images 31 et via lesquels l'opérateur interagit avec les équipements 12, 13 ou les caméras 14, 16, 18 associées au poste de surveillance 20, 22 depuis lequel il opère.

Plus spécifiquement, en référence à la Figure 2, pour chaque équipement 12, 13 commandable à distance, l'interface graphique 54 est configurée pour réaliser l'affichage d'un élément d'identification 66 associé à l'équipement 12, 13. L'élément d'identification 66 est affiché directement sur l'équipement 12, 13 associé de telle sorte que l'élément d'identification 66 est superposé à l'équipement 12, 13 sur les images 31.

Préférentiellement, l'élément d'identification 66 est une représentation schématique de l'équipement 12,13.

L'élément d'identification 66 est associé à un point de l'équipement 12, 13 de telle sorte qu'il se déplace avec l'équipement 12, 13 lorsque le champ de vue 26, 28, 30 de la caméra 14, 16, 18 correspondante est modifié du fait d'un mouvement de la caméra selon un ou plusieurs de ses degrés de liberté.

Dans l'exemple de la Figure 2, l'élément d'identification de l'équipement 12 est un parallélépipède partiellement opaque dans lequel l'équipement 12 est inscrit.

L'élément d'identification 66 est sélectionnable via les moyens de saisie 48, par exemple via le curseur 52.

L'interface graphique 54 est configurée pour réaliser l'affichage d'une interface de commande d'équipement 68, ci-après interface de commande 68, pour la commande des équipements 12. L'affichage de l'interface de commande 68 est sélectivement activable par la sélection de l'élément d'identification 66 correspondant via les moyens de saisie 48.

L'interface de commande 68 comprend des boutons de commande 69 respectivement associés à une action préconfigurée de l'équipement 12, 13 associé, telle que par exemple l'ouverture de l'équipement 12, 13 s'il s'agit d'une porte, sa rotation s'il s'agit d'un tourniquet, sa mise en marche, son extinction, l'affichage d'un message préprogrammé s'il s'agit d'un panneau d'affichage programmable, etc.

Dans des modes de réalisation particuliers, l'interface de commande 68 comprend également des moyens de paramétrage de l'élément d'identification 66, par exemple pour paramétrer la couleur de l'élément d'identification, son opacité, etc.

L'interface graphique 54 comprend une interface de commande 68 dédiée pour chaque équipement 12.

En variante, l'interface graphique 54 comprend une interface de commande 68 dédiée à plusieurs équipements 12, 13 et via laquelle l'opérateur peut commander les équipements 12, 13 correspondants.

L'affichage de l'interface de commande 68 est par exemple réalisée pour une durée prédéfinie après la sélection de l'élément d'identification 66, ou encore jusqu'à un nouvel actionnement des moyens de saisie 48 par l'opérateur.

En outre, l'interface graphique 54 est configurée pour réaliser l'affichage d'une interface de commande de caméra 70, ci-après interface de caméra 70, pour la commande de l'orientation de la caméra 14, 16, 18 dont les images 31 sont affichées sur les moyens d'affichage 46. L'interface de caméra 70 comprend un joystick virtuel 72 actionnable via le curseur 52 pour la réorientation de la caméra 14, 16, 18 selon deux ou plus de deux degrés de liberté de la caméra simultanément.

En outre, l'interface de caméra 70 comprend une barre d'orientation 74 représentant l'ensemble des orientations possibles de la caméra 14, 16, 18 selon l'un de ses degrés de liberté, par exemple autour de son axe panoramique 42, ainsi que l'orientation actuelle de la caméra, représentée par une touche d'orientation 75 en hachures sur la Figure 2. Chaque emplacement de la barre d'orientation 74 correspond à une orientation donnée de la caméra 14, 16, 18 selon le degré de liberté associé. Chaque emplacement de la barre d'orientation 74 est sélectionnable via les moyens de saisie 48, soit directement, soit par déplacement de la touche d'orientation 75. La sélection d'un emplacement de la barre d'orientation déclenche le rappel de la caméra 14, 16, 18 correspondante dans l'orientation associée.

En variante, seule une partie des emplacements de la barre d'orientation 74 est sélectionnable afin de déclencher le rappel de la caméra 14, 16, 18 correspondante dans l'orientation associée.

L'interface de caméra 70 comprend des touches de rappel 76 sélectivement activables pour commander le rappel de la caméra 14, 16, 18 dans une orientation préconfigurée. Les touches de rappel 76 sont par exemple associées à des orientations de la caméra 14, 16, 18 qui correspondent à des champs de vue 26, 28, 30 dans lesquelles un équipement 12, 13 se trouve. Dans le mode de réalisation de la Figure 1, les touches de rappel 76 sont situées sur la barre d'orientation 74. En variante, les touches de rappel 76 sont situées sur le joystick virtuel 72, ou encore sont disposées dans un endroit dédié de l'interface graphique 54.

L'interface graphique 54 est également configurée pour réaliser l'affichage d'objets virtuels 70 respectivement associés à un point particulier du champ d'observation 32, 34, 36 de la caméra 14, 16, 18 dont les images 31 sont affichées sur les moyens d'affichage 46. Les objets virtuels 78 sont compris dans le groupe consistant en: une forme géométrique translucide, une forme géométrique opaque, un ensemble de caractères alphanumériques, une icône ou un symbole, par exemple de signalisation.

La Figure 2 illustre un objet virtuel 78 associé à un point du champ d'observation 32 de la première caméra 14 et représenté par une croix. L'objet virtuel 78 est un octogone translucide.

Les objets virtuels 78 sont générés par le module de génération d'interface graphique 56 des postes de surveillance 20, 22 à partir des données de configuration fournies par le serveur 24. Ceci est décrit plus en détail dans ce qui suit.

Le fonctionnement du système 4 va maintenant être décrit en référence aux Figures 1 et 2.

Lors du fonctionnement du système 10, les caméras 14, 16, 18 fournissent à chaque poste 20, 22 auquel elles sont connectées les prises de vue qu'elles réalisent de leur champ de vue 26, 28, 30. L'unité de traitement 50 des postes 20, 22 réalise l'affichage d'une séquence temporelle des images 31 correspondantes sur les moyens d'affichage 46 correspondants. Dans l'exemple des Figures, l'opérateur du premier poste 20 voit une séquence temporelle d'images 31 délivrées par la première caméra 14 et sur lesquelles figure l'équipement 12. Quant à lui, l'opérateur du deuxième poste 22 peut basculer sélectivement entre les images 31 fournies par l'une et l'autre des deuxième et troisième caméras 16, 18, par exemple au moyen d'une touche (non représentée) sur les moyens de saisie 48 ou encore via un élément (non représenté) de l'interface graphique 54 prévu à cet effet. En cas de sélection de la deuxième caméra 16, l'opérateur visualise une séquence d'images 31 sur lesquelles figure le deuxième équipement 13.

Les modules de génération d'interface graphique 54 des postes 20, 22 génèrent et affichent l'interface graphique 54 correspondante sur les moyens d'affichage 46 associés et en surimpression sur les images 31.

Plus spécifiquement, pour chaque poste 20, 22, l'unité de traitement 50 reçoit les données de configuration du serveur 24, par exemple à fréquence régulière. Les données contiennent les informations relatives aux éléments d'identification 66 des équipements 12, 13 et aux objets virtuels 78 situés dans le champ d'observation 32, 34, 36 d'au moins l'une des caméras 14, 16, 18 auxquelles le poste 20, 22 correspondant est connecté. Le module de réalité augmentée 58 traite les données, génère les éléments d'identification 66 et les objets virtuels 78, et en pilote l'affichage sur l'interface graphique 54. Si le champ de vue dont les images 31 sont affichées ne contient pas de point auquel est associé un élément d'identification 66 ou un objet virtuel 78, aucun élément d'identification 66 ou objet virtuel 78 n'est donc visualisable sur les moyens d'affichage 46 correspondants.

Le module de réalité augmentée 58 met à jour l'affichage des éléments d'identification 66 et des objets virtuels 78 lorsque l'orientation de la caméra 14, 16, 18 dont les images 31 sont affichées est modifiée de telle sorte que les éléments d'identification 66 et les objets virtuels 78 se comportent comme s'ils étaient physiquement présents dans le champ d'observation 32, 34, 36 correspondant. Pour ce faire, le module de calcul 62 détermine la position sur les images 31 des points du ou des champs d'observations 32, 34, 36 correspondant auxquels sont associés un élément d'identification 66 ou un objet virtuel 78, et le module de rendu 64 pilote l'affichage de l'interface graphique 54 en conséquence.

Pour la commande d'un équipement 12, 13, l'opérateur sélectionne l'élément d'identification 66 correspondant via le curseur 52. L'interaction des moyens de saisie 48 avec l'interface graphique 54 est détectée par le module de contrôle 60. Ceci déclenche l'affichage de l'interface de commande 68 associée à l'équipement 12, 13 et via laquelle l'opérateur sélectionne la commande qu'il souhaite faire réaliser par l'équipement via les boutons de commande 69. Une fois la commande sélectionnée, l'information correspondante est détectée par le module de contrôle 60 puis relayée au serveur 24, qui la transmet à l'équipement 12, 13 destinataire. L'équipement 12, 13 exécute alors la commande.

Pour la commande via l'interface graphique 54 de la caméra 14, 16, 18 dont les images 31 sont affichées, l'opérateur utilise l'interface de caméra 70. Par exemple, il modifie l'orientation de la caméra 14 selon deux degrés de liberté simultanément via le joystick virtuel 72, ou sélectionne une orientation préconfigurée de la caméra via une touche de rappel 76. L'opérateur peut également faire défiler la touche d'orientation 75 le long de la barre d'orientation 74, ou bien modifier la position de la touche d'orientation 75 en positionnant le curseur 52 sur la barre d'orientation 74 et en actionnant les moyens de saisie 46. Ces interactions sont détectées par le module de contrôle 60 correspondant, qui relaye la commande correspondante directement à la caméra 14, 16, 18 destinataire. La caméra modifie alors son orientation en conséquence.

Les modes de fonctionnement des postes de surveillance 20, 22 vont maintenant être décrits plus en détail.

Dans le premier mode de fonctionnement, l'opérateur peut créer un objet virtuel 78 et associer l'objet virtuel 78 à un point particulier du champ de vue 26, 28, 30 de l'une des caméras 14, 16, 18 auxquelles le poste 20 est connecté.

Pour déclencher le premier mode de fonctionnement, l'opérateur sélectionne un point particulier de l'image 31, par exemple en pointant le curseur 52 sur le point en question et en actionnant une touche particulière des moyens de saisie 48, telle qu'un bouton particulier de la souris. Le point ainsi défini correspond au point auquel l'objet virtuel 78 sera associé.

L'opérateur définit ensuite le type et la forme de l'objet virtuel 78, par exemple en sélectionnant l'objet virtuel 78 parmi une liste de modèles d'objets virtuels 78, en dessinant une forme fermée via le curseur 52 ou en saisissant les caractères alphanumériques correspondants via les moyens de saisie 58. Une fois l'objet virtuel 78 sélectionné, dessiné ou saisi, son affichage en surimpression sur les images 31 est réalisé par le module de réalité augmentée 58 du poste 20, 22 correspondant, les données associées à l'objet virtuel 78 sont envoyées au serveur 24 et le premier mode de fonctionnement est désactivé. Le serveur 24 stocke les données des objets virtuels 78 générés via les postes 20, 22 et les communique aux postes 20, 22 qui sont connectés à au moins une caméra dont le champ d'observation 32, 34, 36 comprend le point auquel l'objet virtuel 78 est associé.

Ainsi, un objet virtuel 78 associé à un point de la première partie commune 38 sera visualisable sur les moyens d'affichage 46 du premier poste 20 comme du deuxième poste 22 lorsque le point associé à l'objet virtuel 78 sera dans le champ de vue 26, 28 de la caméra 14, 16 correspondante, et ce même si le deuxième poste 20 ne dispose pas du premier mode de fonctionnement, par exemple parce que celui-ci est désactivé.

Préférentiellement, les objets virtuels 78 sont adaptés pour être supprimés depuis les postes 20, 22, par exemple au moyen d'une touche des moyens de saisie prévue à cet effet, ou par interaction avec l'objet virtuel 78 en question.

Dans le deuxième mode de fonctionnement, l'opérateur extrait des images 31 des informations géométriques 80 relatives à des points des champs de vue 26, 28, 30 de la caméra 14, 16, 18 dont les images 31 sont affichées sur les moyens d'affichage 46. Les informations géométriques 80 sont déterminées en faisant l'hypothèse que les positions dans le champ d'observation 32, 34, 36 correspondant et désignées par le curseur 52 appartiennent toutes à un plan horizontal P prédéterminé ou appartiennent toutes à une droite orthogonale au plan horizontal P. Par exemple, le plan horizontal P est le plan du sol de l'installation.

Pour déclencher le deuxième mode de fonctionnement, l'opérateur actionne un bouton particulier des moyens de saisie 48, ou encore une touche prévue à cet effet sur l'interface graphique 54.

Ceci déclenche l'affichage d'un menu de sélection via lequel l'opérateur choisit entre un mode de fonctionnement horizontal 82 dans lequel les informations géométriques 80 sont déterminées en faisant l'hypothèse que les positions dans le champ d'observation 32, 34, 36 correspondant et désignées par le curseur 52 appartiennent toutes au plan horizontal P, c'est-à-dire que les informations géométriques 80 sont projetées dans le plan horizontal P, et un mode de fonctionnement vertical 84 dans lequel les informations géométriques 80 sont déterminées en faisant l'hypothèse que les positions dans le champ d'observation 32, 34, 36 correspondant et désignées par le curseur 52 appartiennent toutes à une droite orthogonale au plan horizontal P, c'est-à-dire que les informations géométriques 80 sont projetées sur une droite orthogonale au plan horizontal P.

Une fois la sélection de l'un ou l'autre des modes horizontal 82 et vertical 84 effectuée, l'opérateur extrait des informations géométriques 80 des images 31 en positionnant le curseur 52 sur un point des moyens d'affichage 46 (point A sur la Figure 2) correspondant à une position dans le champ d'observation 32, 34, 36 correspondant et au sujet de laquelle il souhaite obtenir des informations géométriques 80, et actionne les moyens de saisie 48. Ceci fige la position du point A et déclenche l'affichage d'un segment entre le point A et le point des moyens d'affichage 46 vers lequel le curseur 52 pointe (point B en mode horizontal 82 et point C en mode vertical 84), ainsi que l'affichage d'une ou plusieurs informations géométriques 80.

Les informations géométriques 80 comprennent une indication de la distance dans le champ d'observation 32, 34, 36 entre le point du champ d'observation correspondant au point A et la position dans le champ d'observation correspondant du point B ou C.

Dans les modes horizontal 82 et vertical 84, l'hypothèse est faite que le point A appartient au plan horizontal P.

Dans le mode horizontal 82, l'hypothèse est faite que le point désigné par le curseur 52 (point B) appartient au plan horizontal P.

Dans le mode vertical 84, l'hypothèse est faite que le point désigné par le curseur 52 (point C) est à la verticale du point A:

La distance entre les points A et B ou C est déterminée par le module de calcul 62 du poste 20, 22, qui transpose la position sur les moyens d'affichage 46 des points A et B ou C en positions dans le champ d'observation 32, 34, 36 et calcule la distance entre ces positions.

Le mode vertical 84 permet ainsi de déterminer la hauteur par rapport au plan horizontal P des objets visualisables sur les images 31, et le mode horizontal 82 permet de mesurer la distance dans le plan P entre deux objets.

A noter que dans le mode vertical, une fois le point A désigné, le déplacement du curseur 52 n'est possible que le long de la droite verticale passant par le point A.

En actionnant à nouveau les moyens de saisie 48, l'opérateur fige le point B ou C, qui devient la nouvelle origine pour le calcul de la distance dans le champ d'observation jusqu'au point pointé par le curseur 52.

Les informations géométriques 80 comprennent également ou alternativement une indication de la vitesse de déplacement du point du champ de vue 26, 28, 30 correspondant au point B ou C. En pratique, pour obtenir une information géométrique 80 de vitesse, l'opérateur désigne avec le point A l'objet dont il souhaite mesurer la vitesse de déplacement puis pointe à nouveau le curseur 52 sur l'objet mais sur une image 31 ultérieure, et actionne une deuxième fois les moyens de saisie 48. Le module de calcul 62 calcule alors la vitesse de l'objet à partir des positions du point A et du point B ou C ainsi figés et des dates respectives des images 31 affichées aux instants respectifs où l'opérateur a figé le point A, respectivement le point B ou C.

En variante, un ou plusieurs des postes 20, 22 implémentent un algorithme de détection automatique de mouvement tel que des informations géométriques 80 comprenant une indication de vitesse dans le plan horizontal P sont affichées sur l'interface graphique 54 associée pour tout ou partie des objets en mouvement dans le champ de vue 26, 28, 30 correspondant, ou encore pour tout ou partie des objets présentant certaines caractéristiques prédéterminées, par exemple de taille ou de couleur.

Dans certains modes de réalisation, l'opérateur bascule entre le mode vertical 84 et le mode horizontal 82 via une touche prévue à cet effet sur les moyens de saisie 48 ou sur l'interface graphique 54, ou encore en maintenant une touche des moyens de saisie 48 enfoncée.

Dans le système 10 selon l'invention, l'affichage d'éléments d'identification 66 associés aux équipements 12, 13 sur l'interface graphique 54 des postes facilite l'identification des équipements 12,13. L'affichage des éléments d'identification 66 en superposition sur les équipements 12, 13 facilite la localisation des équipements 12, 13 sur les images 31, ce qui améliore encore l'ergonomie des postes 20, 22.

En outre, l'interface graphique 54 des postes permet de réaliser la commande à distance des équipements 12, 13 directement via les moyens d'affichage 46 et au moyen de la même interface graphique 54 via laquelle il visualise les images 31, ce qui améliore encore l'ergonomie des postes 20, 22 comparativement à un scénario dans lequel les équipements 12, 13 sont commandés à distance par une interface dédiée. En outre, la commande des équipements 12, 13 via les interfaces de commande 68 activées par la sélection des éléments d'identification 66 associés diminue les risques de réaliser la commande du mauvais équipement et améliore le temps de réponse de l'opérateur du fait que celui-ci n'a pas besoin de détourner son attention des images 31.

Par ailleurs, le premier mode de fonctionnement permet aux différents opérateurs du système 10 de partager des informations graphiques et dans le contexte des images 31 fournies par les caméras. En outre, il permet de configurer de manière centralisée les zones de masquage de vie privée de l'installation que le système 10 permet de surveiller, ce qui, dans les systèmes de vidéosurveillance connus, doit être réalisé de manière spécifique pour chaque caméra. Les zones de masquage peuvent par exemple être configurées sous la forme d'objets virtuels 78 opaques dont la forme est choisie de façon adaptée.

En outre, le deuxième mode de fonctionnement permet aux opérateurs d'obtenir des informations géométriques sur les éléments de l'installation surveillée directement via les postes de surveillance, et ce de manière simple et sans connaissance *a priori* de l'installation.

Enfin, le serveur 24 permet de centraliser la configuration des postes 20, 22 de façon générale, ce qui facilite l'opération d'ajout ou de suppression d'un poste au système 10 et rend ce dernier plus souple.

En variante, les postes 20, 22 sont adaptés pour réaliser simultanément l'affichage des images 31 fournies par plusieurs ou toutes les caméras auxquelles ils sont connectés, par exemple en dédiant à chaque caméra 14, 16, 18 une partie des moyens d'affichage 46. Dans cette variante, le module de génération d'interface 56 graphique des postes 20, 22 génère autant d'interfaces graphiques 54 qu'il y a de caméras dont les images 31 sont affichées sur les moyens d'affichage 46, le fonctionnement de chaque interface graphique 54 étant le même que celui décrit précédemment.

## Revendications

1. Système de vidéosurveillance, comprenant :
- au moins une caméra (14, 16, 18) comportant un champ d'observation (32, 34, 36) et propre à délivrer des images (31) de son champ d'observation (32, 34, 36),
- au moins un équipement (12, 13) commandable à distance et situé dans le champ d'observation (32, 34, 36) de ladite caméra (14, 16, 18),
- au moins un poste de surveillance (20, 22) connecté à au moins une caméra (14, 16, 18) et comprenant des moyens de saisie (48), des moyens d'affichage (46) pour l'affichage d'une séquence temporelle d'images (31) délivrées par la ou chaque caméra (14, 16, 18) correspondante, et un module de génération d'interface (56) configuré pour générer une interface graphique (54) en surimpression sur les images (31) affichées sur les moyens d'affichage (46),
**caractérisé en ce que** le module de génération d'interface (56) du ou de chaque poste de surveillance (20, 22) est configuré pour générer et afficher, via l'interface graphique (54), un élément d'identification (66) dudit équipement (12, 13) en surimpression directement sur l'équipement (12, 13), de telle que sorte que l'élément d'identification (66) est superposé à l'équipement (12, 13) sur les images (31), **en ce que** l'élément d'identification (66) est sélectivement activable via les moyens de saisie (48) pour déclencher l'affichage sur l'interface graphique (54) d'une interface de commande (68) pour la commande à distance d'au moins un équipement (12, 13), et **en ce que** le système de vidéosurveillance comprend des moyens de commande (60) pour la commande du ou de chaque équipement (12, 13) en fonction d'informations saisies par un utilisateur via l'interface de commande (68).

2. Système de vidéosurveillance selon la revendication 1, **caractérisé en ce qu'**au moins un poste de surveillance (20, 22) comprend un deuxième mode de fonctionnement dans lequel l'interface graphique (54) dudit poste de surveillance (20, 22) est adaptée pour réaliser l'affichage d'informations géométriques (80) comprenant la distance, dans le champ d'observation (32, 34, 36) de la caméra (14, 16, 18) dont les images (31) sont affichées sur les moyens d'affichage (46), entre deux points (A, B, C) des moyens d'affichage (46), et/ou la vitesse de déplacement d'un objet dans le champ d'observation (32, 34, 36) de la caméra (14, 16, 18) dont les images (31) sont affichées sur les moyens d'affichage (46).

3. Système de vidéosurveillance selon la revendication 2, **caractérisé en ce que** le deuxième mode de fonctionnement comprend un mode de fonctionnement horizontal (82) dans lequel les informations géométriques (80) sont projetées dans un plan horizontal (P) prédéterminé du champ d'observation (32, 34, 36) de la caméra (14, 16, 18) dont les images (31) sont affichées sur les moyens d'affichage (46), et un mode de fonctionnement vertical (84) dans lequel les informations géométriques sont projetées sur une droite orthogonale au plan horizontal (P).

4. Système de vidéosurveillance selon l'une quelconque des revendications précédentes, **caractérisé en ce que** le poste de surveillance (20, 22) comprend un premier mode de fonctionnement dans lequel l'interface graphique (54) associée est adaptée pour la création d'objets virtuels (78) et l'association de chaque objet virtuel (78) à une position du champ d'observation (32, 34, 36) d'une caméra (14, 16, 18) à laquelle ledit poste de surveillance est connecté, de sorte qu'un objet virtuel (78) est affiché sur les images (31) fournies par ladite caméra (14, 16, 18) et dans lesquelles la position du champ d'observation (32, 34, 36) associée à l'objet virtuel (78) est affichée.

5. Système de vidéosurveillance selon la revendication 4, **caractérisé en ce que** chaque objet virtuel (78) est affiché sur les images (31) fournies par chacune des caméras (14, 16, 18) connectées audit poste de surveillance (20, 22) et dont le champ d'observation (32, 34, 36) comprend la position à laquelle l'objet virtuel (78) est associé.

6. Système de vidéosurveillance selon la revendication 4 ou 5, **caractérisé en ce que** chaque objet virtuel (78) est affiché sur les images (31) fournies par chacune des caméras du système de vidéosurveillance (10) et dont le champ d'observation (32, 34, 36) comprend la position à laquelle l'objet virtuel (78) est associé.

7. Système de surveillance selon l'une des revendications 4 à 6, **caractérisé en ce qu'**un objet virtuel (78) est compris dans le groupe consistant en: une forme géométrique translucide, une forme géométrique opaque, un ensemble de caractères alphanumériques, une icône ou un symbole.

8. Système de surveillance selon l'une quelconque des revendications précédentes, **caractérisé en ce qu'**au moins une caméra (14, 16, 18) est orientable, l'interface graphique (54) d'au moins l'un des postes de surveillance (20, 22) connectés à ladite caméra comprenant au moins une touche de rappel (76) sélectivement actionnable pour déclencher le rappel de la caméra dans une orientation prédéterminée.

9. Système de surveillance selon l'une quelconque des revendications précédentes, **caractérisé en ce qu'**au moins une caméra (14, 16, 18) est orientable, l'interface graphique (54) d'au moins l'un des postes de surveillance (20, 22) connectés à ladite caméra comprenant une barre d'orientation (74) représentant l'ensemble des orientations possibles de ladite caméra selon le ou l'un des degrés de liberté de ladite caméra (14, 16,18).

10. Système de vidéosurveillance selon la revendication 9, **caractérisé en ce que** la barre d'orientation (74) comprend un ou plusieurs emplacements sélectionnables, la sélection d'un emplacement sélectionnable de la barre d'orientation (74) étant configurée pour déclencher le rappel de ladite caméra (14, 16, 18) dans l'orientation correspondante.

## Patentansprüche

1. Videoüberwachungssystem aufweisend :
- mindestens eine Kamera (14, 16, 18), welche ein Beobachtungsfeld (32, 34, 36) aufweist und welche geeignet ist, Bilder (31) aus ihrem Beobachtungsfeld zu liefern (32, 34, 36),
- mindestens ein Gerät (12, 13), welches fernsteuerbar ist, und welches sich in dem Beobachtungsfeld (32, 34, 36) der Kamera (14, 16, 18) befindet,
- mindestens eine Überwachungsstation (20, 22), welche an mindestens eine Kamera (14, 16, 18) angeschlossen ist und welche Eingabemittel (48), Anzeigemittel (46) zum Anzeigen einer zeitlichen Abfolge von Bildern (31), welche durch die oder jede entsprechende Kamera (14, 16, 18) geliefert werden, und ein Schnittstellenerzeugungsmodul (56) aufweist, welches konfiguriert ist, eine grafische Benutzeroberfläche (54) zu erzeugen, welche in den auf den Anzeigemitteln (46) angezeigten Bildern (31) eingeblendet wird, **dadurch gekennzeichnet, dass** das Schnittstellenerzeugungsmodul (56) der oder jeder Überwachungsstation (20, 22) konfiguriert ist, durch die grafische Benutzeroberfläche (54) ein Identifizierungselement (66) des Geräts (12, 13), welches direkt auf dem Gerät (12, 13) eingeblendet wird, zu erzeugen und anzuzeigen, so dass das Identifizierungselement (66) auf dem Gerät (12, 13) in den Bildern (31) eingeblendet wird, so dass das Identifizierungselement (66) über die Eingabemittel (48) selektiv aktivierbar ist, um die Anzeige auf der grafischen Benutzeroberfläche (54) einer Steuerschnittstelle (68) für die Fernsteuerung mindestens eines Geräts (12, 13) auszulösen, und dass das Überwachungssystem Steuermittel (60) für die Steuerung des oder jedes Geräts (12, 13) abhängig von durch einen Benutzer über die Steuerschnittstelle (68) eingegebenen Informationen aufweist.

2. Videoüberwachungssystem nach Anspruch 1, **dadurch gekennzeichnet, dass** mindestens eine Überwachungsstation (20, 22) einen zweiten Betriebsmodus aufweist, bei dem die grafische Benutzeroberfläche (54) der Überwachungsstation (20, 22) eingerichtet ist, die Anzeige von geometrischen Informationen (80) bereitzustellen, welche den Abstand in dem Beobachtungsfeld (32, 34, 36) der Kamera (14, 16, 18), deren Bilder (31) auf den Anzeigemitteln (46) angezeigt werden, zwischen zwei Punkten (A, B, C) der Anzeigemittel (46) und / oder die Bewegungsgeschwindigkeit eines Objekts in dem Beobachtungsfeld (32, 34, 36) der Kamera (14, 16, 18), deren Bilder (31) auf den Anzeigemitteln angezeigt werden (46), aufweisen.

3. Videoüberwachungssystem nach Anspruch 2, **dadurch gekennzeichnet, dass** der zweite Betriebsmodus einen horizontalen Betriebsmodus (82), bei dem die geometrischen Informationen (80) in einer vorbestimmten horizontalen Ebene (P) des Beobachtungsfelds (32, 34, 36) der Kamera (14, 16, 18) projiziert werden, deren Bilder (31) auf den Anzeigemitteln (46) angezeigt werden, und einen vertikalen Betriebsmodus (84), bei dem die geometrischen Informationen auf einer zu der horizontalen Ebene (P) orthogonalen Linie projiziert werden, aufweist.

4. Videoüberwachungssystem nach einem der vorhergehenden Ansprüche, **dadurch gekennzeichnet, dass** die Überwachungsstation (20, 22) einen ersten Betriebsmodus aufweist, bei dem die assoziierte grafische Benutzeroberfläche (54) für die Erstellung von virtuellen Objekten (78) und die Zuordnung jedes virtuellen Objekts (78) zu einer Position des Beobachtungsfelds (32, 34, 36) einer Kamera (14, 16, 18) eingerichtet ist, an welche die Überwachungsstation angeschlossen ist, so dass ein virtuelles Objekt (78) auf den Bildern (31) angezeigt wird, welche durch die Kamera (14, 16, 18) geliefert werden und in denen die mit dem virtuellen Objekt (78) assoziierte Position des Beobachtungsfelds (32, 34, 36) angezeigt wird.

5. Videoüberwachungssystem nach Anspruch 4, **dadurch gekennzeichnet, dass** jedes virtuelle Objekt (78) auf den Bildern (31) angezeigt wird, welche von jeder der mit der Überwachungsstation (20, 22) angeschlossenen Kameras (14, 16, 18) geliefert werden, und deren Beobachtungsfeld (32, 34, 36) die Position, der das virtuelle Objekt (78) zugeordnet ist, aufweist.

6. Videoüberwachungssystem nach Anspruch 4 oder 5, **dadurch gekennzeichnet, dass** jedes virtuelle Objekt (78) auf den Bildern (31) angezeigt wird, welche von jeder der Kameras (14, 16, 18) des Videoüberwachungssystems (10) geliefert werden und deren Beobachtungsfeld (32, 34, 36) die Position, der das virtuelle Objekt (78) zugeordnet ist, aufweist.

7. Überwachungssystem nach einem der Ansprüche 4 bis 6, **dadurch gekennzeichnet, dass** ein virtuelles Objekt (78) in der Gruppe enthalten ist, bestehend aus: einer lichtdurchlässigen geometrischen Form, einer lichtundurchlässigen geometrischen Form, einer Menge von alphanumerischen Zeichen, einer Ikone oder einem Symbol.

8. Überwachungssystem nach einem der vorhergehenden Ansprüche, **dadurch gekennzeichnet, dass** mindestens eine Kamera (14, 16, 18) einstellbar ist, wobei die grafische Benutzeroberfläche (54) mindestens eine der an die Kamera angeschlossenen Überwachungsstationen (20, 22) mindestens eine selektiv betreibbare Rücklauftaste (76) aufweist, um den Rücklauf der Kamera in einer vorbestimmten Ausrichtung auszulösen.

9. Überwachungssystem nach einem der vorhergehenden Ansprüche, **dadurch gekennzeichnet, dass** mindestens eine Kamera (14, 16, 18) einstellbar ist, wobei die grafische Benutzeroberfläche (54) mindestens eine der an die Kamera angeschlossenen Überwachungsstationen (20, 22) eine Ausrichtungsstange (74) aufweist, welche die Gesamtheit der möglichen Ausrichtungen der Kamera gemäß dem oder einem der Freiheitsgrade der Kamera (14, 16, 18) repräsentiert.

10. Videoüberwachungssystem nach Anspruch 9, **dadurch gekennzeichnet, dass** die Ausrichtungsstange (74) eine oder mehrere wählbare Stellen aufweist, wobei die Auswahl einer wählbaren Stelle der Ausrichtungsstange (74) konfiguriert ist, den Rücklauf der Kamera (14, 16, 18) in der entsprechenden Orientierung auszulösen.

## Claims

1. A video surveillance system, comprising:
- at least one camera (14, 16, 18) including a field of observation (32, 34, 36) and able to deliver images (31) of its field of observation (32, 34, 36),
- at least one remotely controllable equipment (12, 13) and located in the field of observation (32, 34, 36) of said camera (14, 16, 18),
- at least one monitoring station (20, 22) connected to at least one camera (14, 16, 18) and comprising input means (48), display means (46) for displaying a time sequence of images (31) delivered by said or each corresponding camera (14, 16, 18) and an interface generation module (56) configured for generating a graphic interface (54) overprinted on the images (31) displayed on the display means (46),
**characterized in that** the interface generation module (56) of said or of each monitoring station (20, 22) is configured for generating and displaying via the graphic interface (54), an identification element (66) of said equipment (12, 13) by direct overprinting on the equipment (12, 13), so that the identification element (66) is superposed on the equipment (12, 13) on the images (31), **in that** the identification element (66) is selectively activatable via the input means (48) for triggering the display on the graphic interface (54) of a control interface (68) for remotely controlling at least one equipment (12, 13), and **in that** the video surveillance system comprises control means (60) for controlling said or each equipment (12, 13) according to information inputted by a user via the control interface (68).

2. The video surveillance system according to claim 1, **characterized in that** at least one monitoring station (20, 22) comprises a second operating mode in which the graphic interface (54) of said monitoring station (20, 22) is adapted so as to produce the display of geometrical information (80) comprising the distance, in the field of observation (32, 34, 36) of the camera (14, 16, 18) whose images (31) are displayed on the display means (46), between two points (A, B, C) of the display means (46), and/or the displacement velocity of an object in the field of observation (32, 34, 36) of the camera (14, 16, 18) whose images (31) are displayed on the display means (46).

3. The video surveillance system according to claim 2, **characterized in that** the second operating mode comprises a horizontal operating mode (82) in which the geometrical information (80) is projected in a predetermined horizontal plane (P) of the field of observation (32, 34, 36) of the camera (14, 16, 18) whose images (31) are displayed on the display means (46), and a vertical operating mode (84) in which the geometrical information is projected on a line orthogonal to the horizontal plane (P).

4. The video surveillance system according to any of the preceding claims, **characterized in that** the monitoring station (20, 22) comprises a first operating mode in which the associated graphic interface (54) is adapted for generating virtual objects (78) and for associating each virtual object (78) with a position of the field of observation (32, 34, 36) of a camera (14, 16, 18) to which said monitoring station is connected, so that a virtual object (78) is displayed on the images (31) provided by said camera (14, 16, 18) and in which the position of the field of observation (32, 34, 36) associated with the virtual object (78) is displayed.

5. The video surveillance system according to claim 4, **characterized in that** each virtual object (78) is displayed on the images (31) provided by each of the cameras (14, 16, 18) connected to said monitoring station (20, 22) and for which the field of observation (32, 34, 36) comprises the position with which the virtual object (78) is associated.

6. The video surveillance system according to claim 4 or 5, **characterized in that** each virtual object (78) is displayed on the images (31) provided by each of the cameras of the video surveillance system (10) and for which the field of observation (32, 34, 36) comprises the position with which the virtual object (78) is associated.

7. The video surveillance system according to one of claims 4 to 6, **characterized in that** a virtual object (78) is comprised in the group consisting in: a translucent geometrical shape, an opaque geometrical shape, a set of alphanumerical characters, an icon or a symbol.

8. The video surveillance system according to any of the preceding claims, **characterized in that** at least one camera (14, 16, 18) is swiveling, the graphic interface (54) of at least one of the monitoring stations (20, 22) connected to said camera comprising at least one selectively actuatable return key (76) for triggering the return of the camera into a predetermined orientation.

9. The video surveillance system according to any of the preceding claims, **characterized in that** at least on camera (14, 16, 18) is swiveling, the graphic interface (54) of at least one of the monitoring station (20, 22) connected to said camera comprising an orientation bar (74) representing the whole of the possible orientations of said camera along said or one of the degrees of freedom of said camera (14, 16, 18).

10. The video surveillance system according to claim 9, **characterized in that** the orientation bar (74) comprises one or more selectable locations, the selection of a selectable location of the orientation bar (74) being configured for triggering the return of said camera (14, 16, 18) into the corresponding orientation.
